# EUROPEAN PATENT SPECIFICATION

(11) **EP 3 465 810 B1**
(45) Date of publication and mention of the grant of the patent: **26.02.2020**
(21) Application number: 17727322.4
(22) Date of filing: 25.05.2017
(51) Int. Cl.: H01M 8/1004, H01M 8/1018, H01M 8/1027, H01M 8/1053, H01M 8/1058, H01M 8/106, H01M 8/1069

(54) **MEMBRANE AND PROCESS**
MEMBRAN UND PROZESS
MEMBRANE ET PROCESSUS

(30) Priority: 26.05.2016 GB 201609320
(43) Date of publication of application: 10.04.2019
(73) Proprietor: Johnson Matthey Fuel Cells Limited, London EC4A 4AB (GB)
(72) Inventor: BARNWELL, David Edward, Highworth Wiltshire SN6 7PJ (GB); GRAY, Peter, Swindon Wiltshire SN6 6NZ (GB); RALPH, Thomas Robertson, Swindon Wiltshire SN5 8AT (GB); MISTRY, Mayur Kishorbhai, Swindon Wiltshire SN2 2FA (GB)
(74) Representative: Scott, Philip McDermott
(86) International application number: PCT/GB2017/051475
(87) International publication number: WO 2017/203256

(56) References cited:
- EP-A1- 2 209 156
- US-A1- 2004 208 993
- US-A1- 2008 233 453

## Description

### FIELD OF THE INVENTION

The present invention relates to a reinforced ion-conducting membrane suitable for use in a fuel cell and a process for making a reinforced ion-conducting membrane. The invention further provides a catalyst coated reinforced ion-conducting membrane and a membrane electrode assembly comprising the reinforced membrane of the invention.

### BACKGROUND OF THE INVENTION

A fuel cell is an electrochemical cell comprising two electrodes separated by an electrolyte. A fuel, such as hydrogen, or an alcohol, such as methanol or ethanol, is supplied to the anode and an oxidant, such as oxygen or air, is supplied to the cathode. Electrochemical reactions occur at the electrodes, and the chemical energy of the fuel and the oxidant is converted to electrical energy and heat. Electrocatalysts are used to promote the electrochemical oxidation of the fuel at the anode and the electrochemical reduction of oxygen at the cathode.

In hydrogen-fuelled or alcohol-fuelled proton exchange membrane fuel cells (PEMFC), the electrolyte is a solid polymeric membrane, which is electronically insulating and proton conducting. Protons, produced at the anode, are transported across the membrane to the cathode, where they combine with oxygen to form water. The most widely used alcohol fuel is methanol, and this variant of the PEMFC is often referred to as a direct methanol fuel cell (DMFC).

The principal component of the PEMFC is known as a membrane electrode assembly (MEA) and is essentially composed of five layers. The central layer is the polymeric ion-conducting membrane. On either side of the ion-conducting membrane there is an electrocatalyst layer, containing an electrocatalyst designed for the specific electrocatalytic reaction. Finally, adjacent to each electrocatalyst layer there is a gas diffusion layer. The gas diffusion layer must allow the reactants to reach the electrocatalyst layer and must conduct the electric current that is generated by the electrochemical reactions. Therefore the gas diffusion layer must be porous and electrically conducting.

Conventionally, the MEA can be constructed by a number of methods outlined hereinafter:
(i) The electrocatalyst layer may be applied to the gas diffusion layer to form a gas diffusion electrode. Two gas diffusion electrodes can be placed either side of an ion-conducting membrane and laminated together to form the five-layer MEA;
(ii) The electrocatalyst layer may be applied to both faces of the ion-conducting membrane to form a catalyst-coated ion-conducting membrane. Subsequently, gas diffusion layers are applied to both faces of the catalyst-coated ion-conducting membrane.
(iii) A MEA can be formed from an ion-conducting membrane coated on one side with an electrocatalyst layer, a gas diffusion layer adjacent to that electrocatalyst layer, and a gas diffusion electrode on the other side of the ion-conducting membrane.

Conventional ion-conducting membranes used in the PEM fuel cell are generally formed from sulphonated fully-fluorinated polymeric materials (often generically referred to as perfluorinated sulphonic acid (PFSA) ionomers). Membranes formed from these ionomers are sold under the trade names Nafion™ (e.g. N115 or N117 from Chemours Company), Aciplex™ (Asahi Kasei Chemicals Corp.) and Flemion™ (Asahi Glass Group). Other fluorinated-type membranes include those sold under the trade name Fumapem® F (e.g. F-930 or F-950 from FuMA-Tech GmbH), Aquivion® from Solvay Specialty Polymers, and the GEFC-10N series from Golden Energy Fuel Cell Co., Ltd.

As an alternative to perfluorinated, and partly-fluorinated, polymer based ion-conducting membranes it is possible to use ion-conducting membranes based on non-fluorinated sulfonated or phosphonated hydrocarbon polymers, and in particular polyarylene polymers.

The PFSA or hydrocarbon based ion-conducting membrane may contain a reinforcement, typically wholly embedded within the membrane, to provide improved mechanical properties such as increased tear resistance and reduced dimensional change on hydration and dehydration. The preferred reinforcement may be based on a microporous web or fibres of a fluoropolymer such as polytetrafluoroethylene (PTFE), as described in US 6,254,978, EP 0814897 and US 6,110,330, or polyvinylidene fluoride (PVDF). In particular, the reinforcement may be based on expanded PTFE (ePTFE).

PEMFCs operate in a variety of stressful environments which may compromise the durability and lifetime of the membrane. In particular, during operation of a PEMFC, the ion-conducting membrane is exposed to fluctuating relative humidity conditions. At higher relative humidity, the ion-conducting membrane may absorb water and expand. At lower relative humidity conditions the ion-conducting membrane may contract. In PFSA ion-conducting membranes which are reinforced with ePTFE, such repeated expansion and contraction of the membrane may lead to separation of the ion-conducting membrane polymer from the reinforcement and the formation of pin-holes and cracks.

Surface treatment of PTFE has been adopted to improve its adhesion to other polymers such as PFSA. In particular, pre-treatment of PTFE to make the surface more hydrophilic is described in Park et al, Durability Analysis of Nafion/Hydrophilic Pretreated PTFE Membranes for PEMFCs, Journal of the Electrochemical Society, 159 (12) F864-F870 (2012).

WO 2007/034233 describes a process for preparing a composite membrane comprising coating the surface of a reinforcing material with a polymer layer using a chemical vapour deposition technique, and combining the coated reinforcing material with an ion-conducting polymer.

CA 286541 discloses a method of treating porous ePTFE using surface polymerisation to alter the surface properties of ePTFE. The method includes surface activation using nitrogen plasma followed by surface polymerisation of various hydrophilic functional monomers. The surface treated ePTFE can be used as a reinforcement matrix for proton exchange membranes for fuel cells. In particular, CA 286541 describes the impregnation of hydrocarbon-type ionomers into surface-polymerised ePTFE. Further relevant prior art is disclosed in the documents EP 2 209 156 A1 and US 2008/233453 A1.

It is an object of the present invention to provide an improved reinforced ion-conducting membrane for use in a MEA that overcomes or at least mitigates some of the problems associated with conventional MEA constructions.

### SUMMARY OF THE INVENTION

The present invention provides a reinforced ion-conducting membrane according to claim 1 and a process for preparing a reinforced ion-conducting membrane according to claim 7. In the present invention, the ion-exchange component and the reinforcing component are coupled together via linking groups. The linking groups provide a binding link at the interface of the reinforcement and the PFSA ionomer. Thus, the reinforced ion-conducting membrane of the present invention may exhibit improved resistance to the extreme environmental conditions which occur during fuel cell operation, such as cycling relative humidity. The reinforced ion-conducting membrane of the present invention may also exhibit increased mechanical strength and durability, and reduced gas crossover.

Thus, according to the present invention there is provided a reinforced ion-conducting membrane, suitable for use in a membrane electrode assembly of a fuel cell, comprising:
a planar reinforcing component which comprises a porous polymer material;
an ion-conducting component embedded in at least a region of the planar reinforcing component, which ion-conducting component comprises an ion-conducting polymer material;
linking groups which are chemically bonded to both the planar reinforcing component and the ion-conducting component; wherein the linking groups are non-polymeric; and the linking groups comprise a nitrogen containing moiety; and the linking groups have a different chemical structure to the monomer units of the ion-conducting component.

As used herein, the term "chemically bonded" refers to ionic or covalent bonding. That is, each linking group is bonded to the planar reinforcing component via an ionic bond or via a covalent bond, and is also bonded to the ion-conducting component via either an ionic bond or a covalent bond.

According to a second aspect of the present invention there is provided a process for the production of a reinforced ion-conducting membrane as defined above, said process comprising the steps of:
(i) reacting a planar reinforcing component comprising a porous polymer material with a coupling agent to form a modified reinforcing component;
(ii) impregnating at least a region of the modified reinforcing component with ion-conducting component comprising an ion-conducting polymer material; and
(iii) drying the resulting impregnated modified reinforcing component.

In the process of the present invention, the use of a reinforcing component which has been modified by reaction with a coupling agent may result in faster impregnation of the ion-conducting component during manufacture of the reinforced ion-conducting membrane, thus, processability may be improved, leading to lower manufacturing costs.

It will be clear to the skilled person that many variations of the above basic process are possible, some of which are described in more detail below. However, all such variations, whether explicitly described or not, are within the scope of the invention.

### BRIEF DESCRIPTION OF THE DRAWINGS

Figure 1 is a graph showing peel test results of PFSA-coated modified PTFE film, compared with PFSA-coated unmodified PTFE film.
Figure 2 is a graph showing the test results of tensile strength testing in the machine direction of reinforced ion-conducting membranes according to the present invention and a conventional reinforced ion-conducting membrane.
Figure 3 is a graph showing the test results of tensile strength testing in the transverse direction of reinforced ion-conducting membranes according to the present invention and a conventional reinforced ion-conducting membrane.

### DETAILED DESCRIPTION

The planar reinforcing component is a porous material having pores that extend through the thickness of the material in the z-direction. The pores may all be of essentially similar size or there may be a range of sizes. The pores may have low tortuosity (i.e. the pores extend essentially in a direct route from one face to the other) or alternatively, the tortuosity of the pores is high. The dimensions of the planar reinforcing component in the x- and y-directions will be dependent on the size of the final product incorporating the reinforced ion-exchange component; it is well within the capabilities of the skilled person to determine the most appropriate x- and y-dimensions. The dimensions of the planar reinforcing component, prior to its incorporation into the ion-conducting membrane of the present invention, in the z-direction may be from 1 µm to 200 µm, suitably from 3 µm to 50 µm, and more suitably from 5 µm to 15 µm. Exact dimensions will depend on the final structure and the use to which the reinforced ion-conducting membrane is put. Determination of the dimensions in the z-direction is well within the capabilities of the skilled person. The terms 'x-direction', 'y-direction' and 'z-direction' are well-known to the skilled person and meaning within the plane (x- and y-direction) and through the plane (z-direction).

The porosity of the planar reinforcing component is suitably greater than 30%, preferably greater than 50% and most preferably greater than 70%. The percentage porosity is calculated according to the formula n = Vv / Vt x 100, wherein n is the porosity, Vᵥ is the voids volume and Vt is the total volume of the planar reinforcing component. The voids volume and total volume of the planar reinforcing component can be determined by methods known to those skilled in the art.

The planar reinforcing component employed in the present invention comprises a porous polymer material. Suitably, the porous polymer material is a porous fluoropolymer material, such as a microporous web or fibres of a polytetrafluoroethylene (PTFE), polyvinylidene fluoride (PVDF), ethylene tetrafluoroethylene (ETFE), perfluoroalkoxy alkane (PFA), or fluorinated ethylene propylene (FEP). For example, the planar reinforcing component may comprise electrospun PVDF or forcespun PVDF. In a preferred embodiment, the porous polymer material is expanded PTFE (ePTFE), for example, such as the microporous web structures of ePTFE supplied by Donaldson Company, Inc., known as Tetratex®, or supplied by other manufacturers.

In one embodiment, the reinforced ion-conducting membrane comprises a single planar reinforcing component.

In an alternative embodiment, the reinforced ion-conducting membrane of the present invention may contain one or more further planar reinforcing components each having ion-conducting component embedded in at least a region thereof. Such further planar reinforcing components may comprise a porous fluoropolymer, such as ePTFE, or may comprise any other material that provides reinforcing characteristics, including fibrous or particulate reinforcing materials. In this embodiment, the reinforced ion-conducting membrane may comprise additional linking groups which are chemically bonded to the one or more further planar reinforcing components and to the ion-conducting component. Alternatively, such additional linking groups may be absent. The planar reinforcing component and any further planar reinforcing components may be separated by a layer of unreinforced ion-conducting polymer material.

The ion-conducting component employed in the process of the present invention comprises an ion-conducting polymer material. Suitable ion-conducting polymer materials are proton conducting polymer materials, including partly fluorinated and perfluorinated proton-conducting polymers. Preferably, the ion-conducting component comprises perfluorosulfonic acid polymer (PFSA). Examples of suitable perfluorosulfonic acid polymers will be known to those skilled in the art and are typically provided as a dispersion of the perfluorosulfonic acid polymer in a suitable liquid; examples include perfluorosulfonic acid ionomers, e.g. Nafion™ (available from Chemours Company), Aciplex™ (Asahi Kasei Chemical corp.), Aquivion® (Solvay Specialty Polymers), Flemion™ (Asahi Glass Group) and Fumion® F-series (FuMA-Tech GmbH).

In the present invention, linking groups provide a binding link at the interface of the planar reinforcing component and the ion-conducting component, providing a reinforced ion-conducting membrane with improved durability and mechanical strength.

The linking groups are groups of atoms derived from coupling agents. The term "coupling agent" refers to a substance that can react with both reinforcement and matrix components of a composite material to form a binding link at their interface. In the present invention, the coupling agent is capable of reacting with the reinforcing component and with the ion-conducting component to form linking groups between them which are ionically or covalently bonded to each component.

In one embodiment, the linking groups may be chemically bonded to the planar reinforcing component via covalent bonds. In alternative embodiment, the linking groups may be chemically bonded to the planar reinforcing component via ionic bonds. In another embodiment, some linking groups may be chemically bonded to the planar reinforcing component via covalent bonds and some linking groups may be chemically bonded to the planar reinforcing component via ionic bonds.

In one embodiment, the linking groups may be chemically bonded to the ion-conducting component via covalent bonds. In another embodiment, some linking groups may be chemically bonded to the ion-conducting component via ionic bonds. In another embodiment, some linking groups may be chemically bonded to the ion-conducting component via covalent bonds and some linking groups may be chemically bonded to the ion-conducting component via ionic bonds.

The linking groups themselves are non-polymeric, i.e. they do not comprise significant numbers of repeating monomer units, if any.

The linking groups are chemically distinct from the monomer units of the ion-conducting component. In other words, the ion-conducting component is not directly bonded to the planar reinforcing component, but is bonded through distinct linking groups of a different chemical structure to the monomer units of the ion-conducting component.

The coupling agent employed in the process of the present invention may be any coupling agent that is capable of reacting with both the reinforcing component and the ion-conducting component to form linking groups between them which are ionically or covalently bonded to each component. Preferably, coupling agents are selected to provide linking groups which would be chemically and physically stable under the operating conditions of a fuel cell.

The coupling agent employed in the process of the present invention preferably comprises molecules having a nitrogen containing moiety. The coupling agent may be selected from ammonia, amine compounds, aminosilanes or mixtures thereof. Preferably, the coupling agent is selected from ammonia, allyl amine, trimethoxyaminopropyl silane and dihydroimidazole silane or mixtures thereof. In preferred embodiments, where the molecules of the coupling agent comprise a chain of atoms, the nitrogen containing moieties are end-groups.

Preferably, the reinforced ion-conducting membrane of the invention is derived from a modified reinforcing component, formed by the plasma-treatment of a planar reinforcing component and subsequent reaction with a coupling agent.

In some embodiments, the linking groups are derived from a plasma-treated planar reinforcing component and a coupling agent. As explained in more detail below, initial plasma treatment of the surface of the reinforcing component followed by reaction with a coupling agent forms pendent reactive groups which form the linking groups when the ion-conducting component is added to the planar reinforcing component.

In some embodiments, the linking groups connect the ion-conducting component and the planar reinforcing component by a sulfonamide link. Preferably, the sulfonamide link is formed by the reaction of a sulfonic acid group on the ion-conducting component with a nitrogen atom of the coupling agent.

In step (i) of the process of the present invention, the coupling agent first reacts with the reinforcing component to form a modified reinforcing component.

In the modified reinforcing component at least some of the atoms at the surface of the porous polymer material are replaced with chemically bonded pendant groups derived from the coupling agent. For example, where the planar reinforcing component is ePTFE and the coupling agent is ammonia, at least some of the fluorine atoms at the surface of the ePTFE are replaced with NH₂ groups. For the avoidance of doubt, the "surface" of the polymer material (e.g. ePTFE) includes any exposed surface within the pores of the porous polymer material.

Where the coupling agent comprises molecules having a nitrogen-containing moiety, it is preferred that in step (i) of the process of the present invention, the linking group attaches to the reinforcing component in a manner that leaves the nitrogen containing moiety available for subsequent reaction with the ion-conducting component. Selection of appropriate coupling agents is well within the capabilities of the skilled person.

Preferably step (i) of the process of the present invention is carried out via plasma treatment, wherein the reinforcing component is exposed to a plasma discharge in the presence of the coupling agent. Plasma discharge comprises high energy species, i.e. ions or radicals, derived from precursor plasma gas molecules. During plasma treatment, these high energy species activate the planar reinforcing component by breaking molecular bonds present at its surface resulting in the loss of some atoms from the surface and the formation of free radicals. The plasma discharge also activates the coupling agent, leading to the formation of free radicals derived from the coupling agent. The free radicals derived from the coupling agent then react with the free radicals at the surface of the reinforcing component resulting in the formation of stable chemical bonds. A particular advantage of using plasma treatment to modify the reinforcing component is that only the surface is modified, i.e. the bulk properties of the reinforcing component are unchanged.

In the process of the present invention the gas from which the plasma discharge is generated (the plasma gas) may include hydrogen, argon, oxygen and/or nitrogen. Preferred plasma gases for use in the process of the present invention include hydrogen and argon. In particular, hydrogen may inhibit polymerization and is therefore the preferred plasma gas for any coupling agents which may otherwise be susceptible to homopolymerisation. For example, where the coupling agent is an allyl amine, it is preferred that hydrogen is employed as the plasma gas.

Plasma treatment of the planar reinforcing component may be carried out in a plasma chamber. Plasma chambers are well known to those skilled in the art and thus will not be described in detail.

Preferably, the plasma chamber is maintained at ambient or low temperature. For example, the plasma chamber may be maintained at a temperature of 20 to 100°C, preferably, 20 to 50°C.

Preferably, the plasma chamber is operated under vacuum, for example, the plasma chamber may be operated at a pressure of 20 to 100 millitorr.

The coupling agent may be fed into the plasma chamber in the form of a liquid or a gas. Where the plasma chamber is under vacuum and the coupling agent is fed to the chamber in the form of a liquid, on entry into the evacuated plasma chamber the coupling agent will vaporise.

Flow rates of plasma gas and coupling agents into the plasma chamber will depend on the dimensions of the particular chamber. The determination of appropriate flow rates for a specific chamber is within the capabilities of the skilled person. For example, for a 70 litre plasma chamber, the flowrate of plasma gas into the chamber may be in the range 5 to 100 sccm (standard cubic centimeter per minute). Where the coupling agent is fed to the plasma chamber in the form of a gas, the flowrate of the coupling agent may be in the range 5 to 100 sccm. Where the coupling agent is fed into the plasma chamber in the form of a liquid, the flow rate may be in the range 2 to 30 ml per hour.

Preferably the plasma discharge is generated using a radiofrequency (RF) generator. The input power required by the RF generator will depend on various operational parameters such as the plasma chamber volume and the pumping rate of any vacuum pump used to maintain the plasma chamber at the desired operational pressure. The selection of a suitable input power would be within the capabilities of the skilled person. For example, a RF generator having a frequency of 1000Hz may be operated at an input power in the range 50 to 750 watts, preferably 100 to 750 watts, more preferably 100 to 500 watts.

Where step (i) of the process of the present invention is carried out via plasma treatment, the plasma treatment may be preceded by a plasma cleaning step, which is an ablation process whereby impurities and contaminants may be removed from the surface of the planar reinforcing component. In the plasma cleaning step, the plasma gas employed may comprise, for example, oxygen, air, nitrogen, hydrogen or argon or mixtures thereof. Preferred plasma gases for use the plasma cleaning step include a mixture of argon and hydrogen or a mixture of hydrogen and methanol.

In step (ii) of the process of the present invention, the modified reinforcing component is impregnated with an ion-conducting component such that in the final ion-conducting membrane the pores of at least a region of the planar reinforcing component will be filled with ion-conducting component, i.e. the ion-conducting component is embedded in at least a region of the planar reinforcing component.

Where the linking groups are derived from a coupling agent comprising molecules having a nitrogen containing moiety, and where the ion-conducting component comprises PFSA, it is preferred that on impregnation of the modified reinforcing component with the ion-conducting component the nitrogen moieties react with the sulfonic acid groups present at the surface of the perfluorosulfonic acid polymer to form sulfonamide links. Thus, the linking group is chemically bonded to both the planar reinforcing component and the ion-conducting component.

In step (ii) of the process of the present invention, a carrier material, in the form of a thin film, may first be provided as a support film onto which the reinforcing and ion-conducting components are applied. In one embodiment, a dispersion of ion-conducting component may first be deposited onto the carrier material, followed by laying the modified reinforcing component onto the wet ion-conducting component on the carrier material such that the ion-conducting component impregnates into the pores of the modified reinforcing component. Alternatively, the modified reinforcing component may be laid onto the carrier material prior to deposition of the ion-conducting component.

The ion-conducting component is deposited as a liquid or dispersion by any technique known to those skilled in the art. Such techniques include gravure coating, slot die (slot, extrusion) coating (whereby the coating is squeezed out under pressure via a slot onto the substrate), screen printing, rotary screen printing, inkjet printing, spraying, painting, bar coating, pad coating, gap coating techniques such as knife or doctor blade over roll (whereby the coating is applied to the substrate then passes through a split between the knife and a support roller), and metering rod application such as with a Meyer bar.

In step (iii) of the process of the present invention, the impregnated modified reinforcing component, resulting from step (ii), is dried to form the ion-conducting membrane. Drying, essentially to remove the solvent(s) from the ion-conducting component dispersion, may be effected by any suitable heating technique known to those in the art, for example air impingement, infra-red etc. Suitably, the drying is typically carried out at a temperature of 60-120°C.

In preferred embodiments, step (iii) of the process of the present invention is followed by step (iv) subjecting the dried impregnated modified reinforcing component to high temperature treatment. Such high temperature treatment would employ elevated temperatures compared to the drying step, such as up to 220°C, for example, the high temperature treatment may be carried out at a temperature in the range 150 to 220°C.

Applying additional ion-conducting component may be carried out as many times as required to ensure complete impregnation and/or to provide a layer of ion-conducting component which extends beyond the modified planar reinforcing component. Such a layer may itself be reinforced, for example, by application of one or more further planar reinforcing components. The further reinforcing components may or may not be modified reinforcing components. Alternatively, the layer of ion-conducting component which extends beyond the modified planar reinforcing component may be unreinforced.

In the reinforced ion-conducting membrane of the present invention, the pores of at least a region of the planar reinforcing component are essentially fully impregnated with ion-conducting component. By the phrase "essentially fully impregnated" is meant that at least 90% of the pore volume in at least a region of the planar reinforcing component is filled.

In some embodiments, the pores of the whole planar reinforcing component are essentially fully impregnated with ion-conducting component.

In another embodiment, the reinforcing component comprises a second region in which the pores are essentially filled with a seal component. When the reinforced ion-conducting membrane of the present invention is part of a fuel cell, such a seal component may serve to prevent egress or leakage of reactant gases during operation of the fuel cell. Examples of suitable materials which may be used for the seal component would be known to the person skilled in the art.

Where a carrier material has been employed in the process of the present invention, the carrier material is not part of the final reinforced ion-conducting membrane, but is intended to be removed in a subsequent step; this step may be immediately after the reinforced ion-conducting membrane is formed or may be at some point downstream in the production process when the reinforced ion-conducting membrane is combined with other components to form a reinforced membrane electrode assembly. The carrier material provides support for the reinforced ion-conducting membrane during manufacture and if not immediately removed, can provide support and strength during any subsequent storage and/or transport. The material from which the carrier material is made should provide the required support, be compatible with the planar reinforcing component and ion-conducting component, be impermeable to the ion-conducting component, be able to withstand the process conditions involved in producing the reinforced ion-conducting membrane and be able to be easily removed without damage to the reinforced ion-conducting membrane. Examples of materials suitable for use as a carrier material would be known to the skilled person.

It will be appreciated by the skilled person that the process of the invention is applicable to making either single individual reinforced ion-conducting membranes or a continuous roll of multiple reinforced ion-conducting membranes. If a continuous roll of reinforced ion-conducting membranes is being made, the carrier material and planar reinforcing component will be provided as roll-good products. The process of the invention is particularly suitable for providing a roll containing multiple reinforced ion-conducting membranes.

In the process of the present invention, plasma treatment of a roll of planar reinforcing component, such as ePTFE, may be effected using commercially available reel-to-reel plasma treating systems.

The thickness of the final reinforced ion-conducting membrane in the through-plane direction (z-direction) in the region impregnated with ion-conducting component will depend upon its final application. In general however, the thickness will be ≤ 200µm, such as ≤ 50µm, for example ≤ 20µm. Suitably, the thickness is ≥ 5µm. In one embodiment, the final reinforced ion-conducting membrane has a thickness in the through-plane direction (z-direction) in the region impregnated with ion-conducting component of from 8-20µm.

The reinforced ion-conducting membrane of the invention may be used to prepare components used in a fuel cell, such as a catalyst-coated ion-conducting membrane and a membrane electrode assembly. Preparation of such components lends itself to using a high volume continuous manufacturing process and preparing roll-good products.

To prepare a catalyst-coated ion-conducting membrane, a catalyst is applied to one side or both sides of the reinforced ion-conducting membrane by techniques known to those skilled in the art. Suitable catalysts and methods of application would be known to the skilled person.

The catalyst is suitably an electrocatalyst, which may be a finely divided unsupported metal powder, or may be a supported catalyst wherein small metal nanoparticles are dispersed on electrically conducting particulate carbon supports. The electrocatalyst metal is suitably selected from
(i) the platinum group metals (platinum, palladium, rhodium, ruthenium, iridium and osmium),
(ii) gold or silver,
(iii) a base metal,
or an alloy or mixture comprising one or more of these metals or their oxides. The preferred electrocatalyst metal is platinum, which may be alloyed with other precious metals or base metals.

The invention further provides a membrane electrode assembly comprising a reinforced ion-conducting membrane as hereinbefore described having electrocatalyst layers disposed either side of the membrane and gas diffusion layers contacting each of the electrocatalyst layers.

A membrane electrode assembly comprising a reinforced ion-conducting membrane of the invention may be made up in a number of ways including, but not limited to:
(i) an electrocatalyst layer may be applied to a gas diffusion layer to form a gas diffusion electrode; then two gas diffusion electrodes (one anode and one cathode) may be placed either side of the reinforced ion-conducting membrane of the invention;
(ii) an electrocatalyst layer may be applied to both faces of the reinforced ion-conducting membrane of the invention to form a catalyst-coated ion-conducting membrane, and subsequently, gas diffusion layers may be applied to both faces of the catalyst-coated ion-conducting membrane;
(iii) an electrocatalyst layer may be applied to one face of the reinforced ion-conducting membrane of the invention, a gas diffusion layer applied to that electrocatalyst layer and then a gas diffusion electrode applied to the other side of the reinforced ion-conducting membrane.

The gas diffusion layers are suitably based on conventional gas diffusion substrates. Typical substrates include non-woven papers or webs comprising a network of carbon fibres and a thermoset resin binder (e.g. the TGP-H series of carbon fibre paper available from Toray Industries Inc., Japan or the H2315 series available from Freudenberg FCCT KG, Germany, or the Sigracet® series available from SGL Technologies GmbH, Germany or AvCarb® series from AvCarb Material Solutions, or woven carbon cloths. The carbon paper, web or cloth may be provided with a further treatment prior to being incorporated into a MEA either to make it more wettable (hydrophilic) or more wet-proofed (hydrophobic). The nature of any treatments will depend on the type of fuel cell and the operating conditions that will be used. The substrates can be made more wettable by incorporation of materials such as amorphous carbon blacks via impregnation from liquid suspensions, or can be made more hydrophobic by impregnating the pore structure of the substrate with a colloidal suspension of a polymer such as PTFE or polyfluoroethylenepropylene (FEP), followed by drying and heating above the melting point of the polymer. For applications such as the PEMFC, a microporous layer is typically applied to the gas diffusion substrate on the face that will contact the electrocatalyst layer. The microporous layer typically comprises a mixture of a carbon black and a polymer such as polytetrafluoroethylene (PTFE).

A yet further aspect of the invention provides a fuel cell comprising a reinforced ion-conducting membrane or a membrane electrode assembly as hereinbefore described.

All of the embodiments described for PEM fuel cells apply equally to MEAs for PEM electrolysers. In these PEM electrolysers, a voltage is applied across the membrane electrode assemblies such that water supplied to the device is split into hydrogen and oxygen, at the cathode and anode respectively. The MEAs may require different catalyst components to a PEM fuel cell, such as Ir and Ru based materials at the anode, but are otherwise very similar to MEAs used for fuel cells.

The invention will now be further described with reference to the following examples, which are illustrative, but not limiting of the invention.

### EXAMPLES

### Plasma treatment of non-porous PTFE film

Sheets of commercially available flat PTFE film (skived PTFE film, 75µm thickness) were subjected to batch-wise plasma treatment using a 70 litre plasma chamber, equipped with an RF plasma generator of 1000Hz. The skived PTFE film is not a porous material and thus is not a reinforcing component as required by the present invention; however, the skived PTFE presents the same chemical surface as ePTFE and acts as a model surface to demonstrate the benefits of the invention.

Prior to plasma treatment, the skived PTFE film was washed with a propanol-water solution and dried. A reference PTFE film (Example A), which was not subjected to plasma treatment, was also washed and dried in the same manner.

Several sheets of the washed and dried PTFE film were then loaded into the plasma chamber. The chamber was then sealed and evacuated to a base pressure of approximately 50 millitorr.

The sheets of skived PTFE film were first subjected to a plasma cleaning step, using either a mixture of argon and hydrogen or a mixture of hydrogen and methanol as the plasma gas.

Following the plasma-cleaning step, coupling agents were admitted into the chamber along with the hydrogen plasma gas. The plasma treatment operated for a cycle lasting 2 minutes at a pulse duty of 100%.

At the completion of each the treatment cycle, the chamber was again evacuated to the base pressure, then purged with an inert gas before being allowed to slowly vent to atmosphere.

The plasma gases and coupling agents used and the treatment conditions employed are shown in Table 1.

**Table 1**

| Example | Cleaning step plasma gas | Coupling agent/plasma gas | Flow Rates Coupling agent / Plasma gas | RF Input Power (watts) | Treatment pressure (millitorr) |
|---|---|---|---|---|---|
| 1 | Ar/H₂ | Ammonia/H₂ | 75 seem / 65sccm | 500 | 71 - 68 |
| 2 | Ar/H₂ | Allyl amine/H₂ | 9 ml/hr /100 seem | 250 | 76 - 70 |
| 3 | H_{2/}CH₃OH | TIS*/H₂ | 9 ml/hr /100 seem | 200 | 73 - 67 |
| A | - | - | - | - | - |

| | | | | | |
|---|---|---|---|---|---|
| *TIS = triethoxysilylpropyldihydroimidazole | | | | | |

### Application of PFSA layer onto plasma-treated PTFE film surface

A dispersion of polymeric ion-conducting component (commercially available PFSA) was cast onto the surface of the films of Examples 1, 2, 3 and A via the metering rod (Meyer bar) method and then dried by air-drying at ambient conditions for 30-60 minutes, followed by oven-drying at 120°C for 20 minutes. Once dried, the films were subjected to heat treatment at a temperature of 200°C for 10 minutes in an air circulating oven.

Since the skived PTFE film is not porous, the PFSA forms a coating layer on the PTFE films. The resulting coated films had a thickness of 20 microns.

### Peel Testing of PFSA-coated PTFE films

In order to demonstrate the presence of chemically bonded linking groups at the interface of the ion-conducting PFSA coating layer and the plasma treated PTFE films, the coated films prepared as described above were subjected to a peel test according to BS5350 "T-Peel Test", wherein the PTFE films and their PFSA coating were mechanically pulled apart.

The PFSA-coated films were first conditioned by pressing in a hydraulic press at a temperature of 150°C and pressure of 1.61 MPa for 2 minutes, followed by cooling under load to room temperature. The coated films were then held at a temperature of 23°C (+/- 2°C) and humidity of 50%RH (+/- 5%RH) for a minimum of 24 hours.

The PTFE films and their PFSA coatings were then pulled apart using a Hounsfield Tensometer with a jaw separation speed of 20mm/minute at a temperature of 23°C (+/- 2°C) and humidity of 50%RH (+/- 5%RH). The peel force was recorded using a load cell.

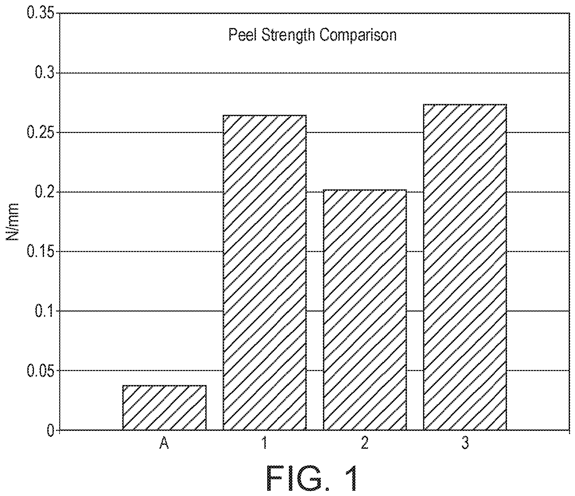

Figure 1 shows the peel force results. It can be seen from Figure 1 that coated films comprising the modified films of Examples 1, 2 and 3 have a much greater peel bond strength than the coated film comprising unmodified film A.

Visual inspection of the films after peel testing determined that for the films of Examples 1, 2 and 3 either some PFSA remained affixed to the peeled PTFE film or the surface of the peeled PFSA was coated with PTFE fibrils (i.e. a layer of PTFE polymer had detached from the bulk of the PTFE film). No residue was visible on the comparative film of Example A after peel testing.

These results indicate that linking groups chemically bonded to both the PTFE and the PFSA were formed when the modified films of Examples 1, 2 and 3 were coated with PFSA.

### Plasma treatment of porous ePTFE film

Samples of commercially available expanded PTFE (ePTFE) with an average thickness of 17µm were cut from a commercially available roll-good material. The orientation of the ePTFE samples in terms of the original machine direction (MD) and transverse direction (TD) were recorded. The samples were mounted onto carrier frames of approximate 30cm x 40cm dimensions and subjected to batch-wise plasma treatment using a 70 litre plasma chamber equipped with an RF plasma generator having a frequency of 1000 Hz. A sample of ePTFE was also prepared which was not subjected to plasma treatment (Example B).

Several ePTFE samples were loaded into the plasma chamber and the chamber was sealed and evacuated to a base pressure of approximately 50 milli-torr.

Gaseous ammonia (the coupling agent) was then admitted into the plasma chamber along with hydrogen plasma gas for a 2 minute treatment cycle.

At the completion of the treatment cycle, the plasma chamber was again evacuated to the base pressure, then purged with an inert gas before being allowed to slowly vent to atmosphere.

The conditions employed in the plasma treatment are shown in Table 2.

**Table 2**

| Example | Coupling agent/Plasma gas | Coupling agent flowrate (seem) | Plasma gas flowrate (seem) | RF Input Power (watts) | Pulse (% duty cycle) |
|---|---|---|---|---|---|
| 4 | NH₃/H₂ | 90 | 30 | 250 | 50 |
| 5 | NH₃/H₂ | 60 | 60 | 250 | 50 |
| B | - | - | - | - | - |

### Preparation of reinforced ion-conducting membrane

Reinforced ion-conducting membranes were prepared using the plasma treated ePTFE samples according to Examples 4 and 5 by casting a layer of a dispersion of a commercially available PFSA ion-conducting component (Solvay Specialty Polymers Aquivion® D79-25BS) onto the surface of a carrier film, using the metering rod (Meyer bar) method, and subsequently laying the plasma treated ePTFE samples onto the wet layer of PFSA dispersion, such that the PFSA impregnated into the pores of the ePTFE. The resulting wet impregnated ePTFE samples were then air-dried at ambient conditions.

A second layer of the PFSA dispersion was subsequently cast onto the resulting dried impregnated ePTFE samples in order to ensure complete impregnation of the ePTFE.

The resulting impregnated ePTFE samples were air-dried at ambient conditions and then heat treated at 200°C in an atmospheric air circulating oven. The resulting reinforced membranes had an approximate thickness of 18µm.

The reinforced membranes made using the plasma treated ePTFE samples of Examples 4 and 5 are reinforced ion-conducting membranes according to the present invention.

A comparative reinforced ion-conducting membrane was also prepared in the same manner but using the untreated sample of ePTFE (Example B) and is representative of a conventional reinforced ion-conducting membrane.

The resulting reinforced membranes were cut into 150mm x 15mm strips, correlating to the original ePTFE roll machine direction and transverse direction, and their tensile strength tested in a Hounsfield tensile tester (jaw gap 100mm), according to ISO527 (equivalent to BS 2782 and ASTM D882).

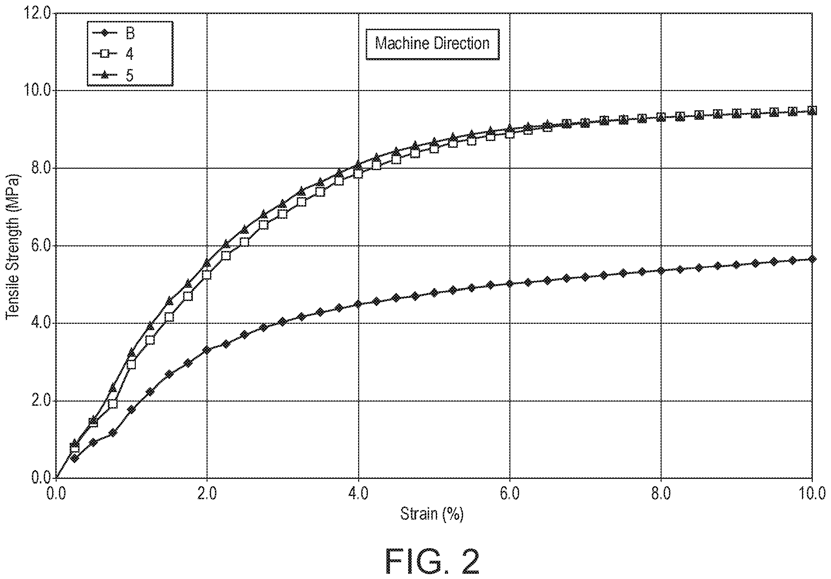

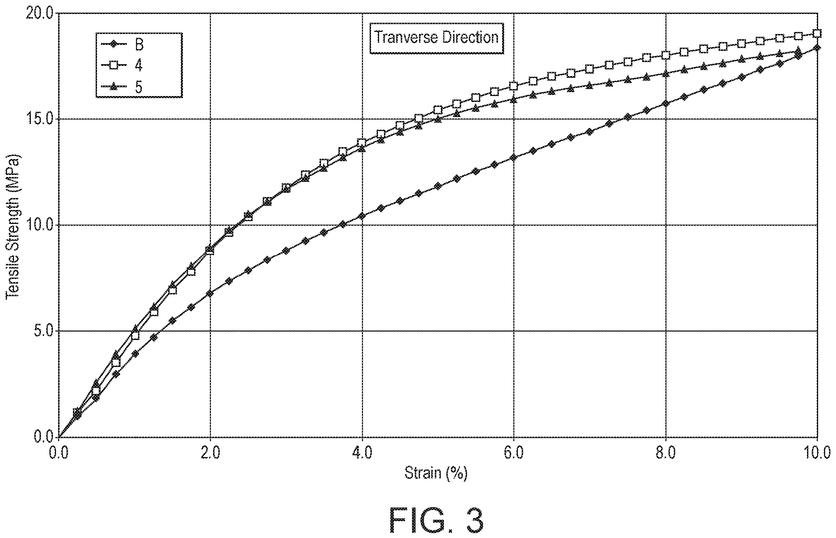

Figures 2 and 3 are graphs showing the tensile strength test results in the machine and transverse directions, respectively. These results demonstrate that reinforced ion-conducting membranes according to the present invention exhibit increased tensile strength compared with conventional reinforced membranes.

## Claims

1. A reinforced ion-conducting membrane, suitable for use in a membrane electrode assembly of a fuel cell, comprising:
a planar reinforcing component which comprises a porous polymer material;
an ion-conducting component embedded in at least a region of the planar reinforcing component, which ion-conducting component comprises an ion-conducting polymer material;
linking groups which are chemically bonded to both the planar reinforcing component and the ion-conducting component; wherein
the linking groups are non-polymeric; and
the linking groups comprise a nitrogen containing moiety; and
the linking groups have a different chemical structure to the monomer units of the ion-conducting component.

2. A reinforced ion-conducting membrane according to claim 1 wherein the porous polymer material is a porous fluoropolymer material; optionally
wherein the porous fluoropolymer material is expanded polytetrafluoroethylene (ePTFE).

3. A reinforced ion-conducting membrane according to any preceding claim wherein the ion-conducting polymer material is a partly fluorinated or perfluorinated proton-conducting polymer; optionally
wherein the ion-conducting polymer material is perfluorosulfonic acid polymer (PFSA).

4. A reinforced ion-conducting membrane according to any preceding claim wherein the linking groups are chemically bonded to the planar reinforcing component via covalent bonds or via ionic bonds.

5. A reinforced ion-conducting membrane according to any preceding claim wherein the linking groups are chemically bonded to the ion-conducting component via covalent bonds or via ionic bonds.

6. A reinforced ion-conducting membrane according to claim 1 wherein the linking groups are derived from a coupling agent selected from ammonia, amine compounds, aminosilanes or mixtures thereof; optionally
wherein the coupling agent is selected from ammonia, allyl amine, trimethoxyaminopropyl silane, dihydroimidazole silane or mixtures thereof.

7. A process for the production of a reinforced ion-conducting membrane according to any one of claims 1 to 6, said process comprising the steps of:
(i) reacting a planar reinforcing component comprising a porous polymer material with a coupling agent to form a modified reinforcing component;
(ii) impregnating at least a region of the modified reinforcing component with ion-conducting component comprising an ion-conducting polymer material; and
(iii) drying the resulting impregnated modified reinforcing component.

8. A process as claimed in claim 7 wherein the porous polymer material is a porous fluoropolymer material; optionally
wherein the porous fluoropolymer material is ePTFE.

9. A process as claimed in any of claims 7 to 8 wherein the ion-conducting polymer material is a partly fluorinated or perfluorinated proton-conducting polymer; optionally
wherein the ion-conducting polymer material is perfluorosulfonic acid polymer (PFSA).

10. A process as claimed in any of claims 7 to 9 wherein step (i) is carried out by exposing the planar reinforcing component to a plasma discharge in the presence of the coupling agent; optionally
wherein the plasma discharge is generated from a precursor plasma gas selected from hydrogen, argon, oxygen, nitrogen or mixtures thereof.

11. A process as claimed in claim any of claims 7 to 10 wherein the coupling agent is selected from ammonia, amine compounds, aminosilanes or mixtures thereof; optionally
wherein the coupling agent is selected from ammonia, allyl amine, trimethoxyaminopropyl silane and dihydroimidazole silane or mixtures thereof.

12. A process as claimed in any one of claims 7 to 11 wherein step (iii) is followed by (iv) subjecting the dried impregnated modified reinforcing component to high temperature treatment; optionally
wherein step (iv) is carried out at a temperature in the range 150 to 220°C.

13. A catalyst coated reinforced ion-conducting membrane comprising a reinforced ion-conducting membrane as claimed in claims 1 to 6 and a catalyst applied to one or both faces of the reinforced ion-conducting membrane; optionally
wherein the catalyst is an electrocatalyst.

14. A membrane electrode assembly comprising a reinforced ion-conducting membrane as claimed in any one of claims 1 to 6 having electrocatalyst layers disposed either side of the membrane and gas diffusion layers contacting each of the electrocatalyst layers.

15. A fuel cell comprising the membrane electrode assembly as claimed in claim 14.

## Patentansprüche

1. Verstärkte ionenleitende Membran, die sich zur Verwendung in einer Membran-Elektroden-Anordnung einer Brennstoffzelle eignet, umfassend:
einen ebenen verstärkenden Bestandteil, der ein poröses Polymermaterial umfasst;
einen ionenleitenden Bestandteil, der in mindestens eine Region des ebenen verstärkenden Bestandteils eingebettet ist, wobei der ionenleitende Bestandteil ein ionenleitendes Polymermaterial umfasst;
Verbindungsgruppen, die sowohl an den ebenen verstärkenden Bestandteil als auch an den ionenleitenden Bestandteil chemisch gebunden sind; wobei
die Verbindungsgruppen nicht polymerartig sind; und
die Verbindungsgruppen einen stickstoffhaltigen Baustein umfassen; und
die Verbindungsgruppen eine chemische Struktur haben, die sich von den Monomereinheiten des ionenleitenden Bestandteils unterscheidet.

2. Verstärkte ionenleitende Membran gemäß Anspruch 1, wobei es sich bei dem porösen Polymermaterial um ein poröses Fluorpolymermaterial handelt, wobei
es sich bei dem porösen Fluorpolymermaterial möglicherweise um expandiertes Polytetrafluorethylen (ePTFE) handelt.

3. Verstärkte ionenleitende Membran gemäß einem beliebigen vorhergehenden Anspruch, wobei es sich bei dem ionenleitenden Polymermaterial um ein teilfluoriertes oder perfluoriertes protonenleitendes Polymer handelt; wobei
wobei es sich bei dem ionenleitenden Polymermaterial möglicherweise um Perfluorsulfonsäurepolymer (PFSA) handelt.

4. Verstärkte ionenleitende Membran nach einem beliebigen vorhergehenden Anspruch, wobei die Verbindungsgruppen über kovalente Bindungen oder über ionische Bindungen chemisch an den ebenen verstärkenden Bestandteil gebunden sind.

5. Verstärkte ionenleitende Membran nach einem beliebigen vorhergehenden Anspruch, wobei die Verbindungsgruppen über kovalente Bindungen oder über ionische Bindungen chemisch an den ionenleitenden Bestandteil gebunden sind.

6. Verstärkte ionenleitende Membran gemäß Anspruch 1, wobei die Verbindungsgruppen sich von einem Kupplungsmittel ableiten, das aus Ammoniak, Aminverbindungen, Aminosilanen oder deren Mischungen ausgewählt ist; wobei
wobei das Kupplungsmittel möglicherweise aus Ammoniak, Allylamin, Trimethoxyaminopropylsilan, Dihydroimidazolsilan oder deren Mischungen ausgewählt ist.

7. Verfahren zur Herstellung einer verstärkten ionenleitenden Membran gemäß einem beliebigen der Ansprüche 1 bis 6, wobei das Verfahren die folgenden Schritte umfasst:
(i) Umsetzen eines ebenen verstärkenden Bestandteils, der ein poröses Polymermaterial umfasst, mit einem Kupplungsmittel, um einen modifizierten verstärkenden Bestandteil zu bilden;
(ii) Durchtränken mindestens einer Region des modifizierten verstärkenden Bestandteils mit einem ionenleitenden Bestandteil, der ein ionenleitendes Polymermaterial umfasst; und
(iii) Trocknen des erhaltenen durchtränkten modifizierten verstärkenden Bestandteils.

8. Verfahren, wie es in Anspruch 7 beansprucht ist, wobei es sich bei dem porösen Polymermaterial um ein poröses Fluorpolymermaterial handelt; wobei
es sich bei dem porösen Fluorpolymermaterial möglicherweise um ePTFE handelt.

9. Verfahren, wie es in beliebigen der Ansprüche 7 bis 8 beansprucht ist, wobei sich bei dem ionenleitenden Polymermaterial um ein teilfluoriertes oder perfluoriertes protonenleitendes Polymer handelt; wobei
es sich bei dem ionenleitenden Polymermaterial möglicherweise um Perfluorsulfonsäurepolymer (PFSA) handelt.

10. Verfahren, wie es in beliebigen der Ansprüche 7 bis 9 beansprucht ist, wobei der Schritt (i) durchgeführt wird, indem der ebene verstärkende Bestandteil in Gegenwart des Kupplungsmittels einer Plasmaentladung ausgesetzt wird; wobei
die Plasmaentladung möglicherweise ausgehend von einem Vorläuferplasmagas erzeugt wird, welches aus Wasserstoff, Argon, Sauerstoff, Stickstoff oder deren Mischungen ausgewählt ist.

11. Verfahren, wie es in beliebigen der Ansprüche 7 bis 10 beansprucht ist, wobei das Kupplungsmittel aus Ammoniak, Aminverbindungen, Aminosilanen oder deren Mischungen ausgewählt ist; wobei
wobei das Kupplungsmittel möglicherweise aus Ammoniak, Allylamin, Trimethoxyaminopropylsilan und Dihydroimidazolsilan oder aus deren Mischungen ausgewählt ist.

12. Verfahren, wie es in einem beliebigen der Ansprüche 7 bis 11 beansprucht ist; wobei, im Anschluss an den Schritt (iii), (iv) der getrocknete durchtränkte modifizierte verstärkende Bestandteil einer Hochtemperaturbehandlung unterzogen wird; wobei
der Schritt (iv) möglicherweise bei einer Temperatur im Bereich von 150 bis 220 °C durchgeführt wird.

13. Katalysatorbeschichtete verstärkte ionenleitende Membran, die eine verstärkte ionenleitende Membran, wie sie in den Ansprüchen 1 bis 6 beansprucht ist, und einen Katalysator umfasst, welcher einseitig oder beidseitig auf die verstärkte ionenleitende Membran aufgebracht ist; wobei
es sich bei dem Katalysator möglicherweise um einen Elektrokatalysator handelt.

14. Membran-Elektroden-Anordnung, die eine verstärkte ionenleitende Membran, wie sie in einem beliebigen der Ansprüche 1 bis 6 beansprucht ist, umfasst, wobei auf beiden Seiten der Membran Elektrokatalysatorschichten angeordnet sind und wobei Gasdiffusionsschichten mit jeder der Elektrokatalysatorschichten in Kontakt stehen.

15. Brennstoffzelle, welche die Membran-Elektroden-Anordnung umfasst, wie sie in Anspruch 14 beansprucht ist

## Revendications

1. Membrane renforcée conduisant les ions, appropriée pour une utilisation dans un ensemble d'électrode à membrane d'une pile à combustible, comprenant :
- un élément de renforcement plan qui comprend un matériau polymère poreux ;
- un élément conduisant les ions intégré dans au moins une région de l'élément de renforcement plan, lequel élément conduisant les ions comprend un matériau polymère conduisant les ions ;
- des groupes de liaison qui sont liés chimiquement à la fois à l'élément de renforcement plan et à l'élément conduisant les ions ;
- les groupes de liaison étant non polymères ; et
- les groupes de liaison comprenant un fragment contenant de l'azote ; et
- les groupes de liaison présentant une structure chimique différente de celle des motifs monomères de l'élément conduisant les ions.

2. Membrane renforcée conduisant les ions selon la revendication 1, le matériau polymère poreux étant un matériau fluoropolymère poreux ; éventuellement, le matériau fluoropolymère poreux étant du polytétrafluoroéthylène expansé (ePTFE).

3. Membrane renforcée conduisant les ions selon l'une quelconque revendication précédente, le matériau polymère conduisant les ions étant un polymère conduisant les protons, partiellement fluoré ou perfluoré ; éventuellement, le matériau polymère conduisant les ions étant un polymère de l'acide perfluorosulfonique (PFSA).

4. Membrane renforcée conduisant les ions selon l'une quelconque revendication précédente, les groupes de liaison étant liés chimiquement à l'élément de renforcement plan via des liaisons covalentes ou via des liaisons ioniques.

5. Membrane renforcée conduisant les ions selon l'une quelconque revendication précédente, les groupes de liaison étant liés chimiquement à l'élément conduisant les ions via des liaisons covalentes ou via des liaisons ioniques.

6. Membrane renforcée conduisant les ions selon la revendication 1, les groupes de liaison étant dérivés d'un agent de couplage choisi parmi l'ammoniac, les composés à base d'amine, les aminosilanes ou leurs mélanges ; éventuellement, l'agent de couplage étant choisi parmi l'ammoniac, l'allylamine, le triméthoxyaminopropylsilane, le dihydro-imidazolesilane ou leurs mélanges.

7. Procédé pour la production d'une membrane renforcée conduisant les ions selon l'une quelconque des revendications 1 à 6, ledit procédé comprenant les étapes de :
(i) réaction d'un élément de renforcement plan comprenant un matériau polymère poreux avec un agent de couplage pour former un élément de renforcement modifié ;
(ii) imprégnation d'au moins une région de l'élément de renforcement modifié par un élément conduisant les ions comprenant un matériau polymère conduisant les ions ; et
(iii) séchage de l'élément de renforcement modifié imprégné obtenu.

8. Procédé selon la revendication 7, le matériau polymère poreux étant un matériau fluoropolymère poreux ; éventuellement, le matériau fluoropolymère étant de l'ePTFE.

9. Procédé selon l'une quelconque des revendications 7 à 8, le matériau polymère conduisant les ions étant un polymère conduisant les protons, partiellement fluoré ou perfluoré ; éventuellement, le matériau polymère conduisant les ions étant un polymère de l'acide perfluorosulfonique (PFSA).

10. Procédé selon l'une quelconque des revendications 7 à 9, l'étape (i) étant effectuée par la soumission de l'élément de renforcement plan à une décharge au plasma en présence de l'agent de couplage ; éventuellement, la décharge au plasma étant générée à partir d'un plasma gazeux de précurseur choisi parmi l'hydrogène, l'argon, l'oxygène, l'azote ou leurs mélanges.

11. Procédé selon l'une quelconque des revendications 7 à 10, l'agent de couplage étant choisi parmi l'ammoniac, les composés à base d'amine, les aminosilanes ou leurs mélanges ; éventuellement, l'agent de couplage étant choisi parmi l'ammoniac, l'allylamine, le triméthoxyaminopropylsilane et le dihydro-imidazolesilane ou leurs mélanges.

12. Procédé selon l'une quelconque des revendications 7 à 11, l'étape (iii) étant suivie par (iv) la soumission de l'élément de renforcement modifié imprégné séché à un traitement à haute température ; éventuellement, l'étape (iv) étant effectuée à une température dans la plage de 150 à 220°C.

13. Membrane renforcée conduisant les ions revêtue d'un catalyseur, comprenant une membrane renforcée conduisant les ions selon les revendications 1 à 6 et un catalyseur appliqué sur une ou les deux faces de la membrane renforcée conduisant les ions ; éventuellement le catalyseur étant un électrocatalyseur.

14. Ensemble d'électrode à membrane comprenant une membrane renforcée conduisant les ions selon l'une quelconque des revendications 1 à 6, présentant des couches d'électrocatalyseur disposées de chaque côté de la membrane et des couches de diffusion de gaz en contact avec chacune des couches d'électrocatalyseur.

15. Pile à combustible comprenant l'ensemble d'électrode à membrane selon la revendication 14.
